# EUROPEAN PATENT APPLICATION

(11) **EP 3 951 539 A1**
(43) Date of publication of application: **09.02.2022**
(21) Application number: 20778545.2
(22) Date of filing: 25.02.2020
(51) Int. Cl.: G05D 1/00, G05D 1/02

(54) **AUTOMATED GUIDED VEHICLE OPERATION SYSTEM**

(30) Priority: 27.03.2019 JP 2019060955
(71) Applicant: Kabushiki Kaisha Toyota Jidoshokki, Kariya-shi, Aichi 448-8671 (JP)
(72) Inventor: NAKAGAWA, Masato, Kariya-shi, Aichi 448-8671 (JP)
(74) Representative: Vigand, Philippe
(86) International application number: PCT/JP2020/007442
(87) International publication number: WO 2020/195456

(57) **Abstract**

A terminal (60) can operate an automated guided vehicle (10) simply by photographing the automated guided vehicle (10) with a photographing unit (62). In addition, an operation state control unit (65) allows the terminal 60 to operate the automated guided vehicle (10) while the photographing unit (62) continues to acquire the image of a mark (55) of identification information. That is, when the mark (55) of the identification information may not be confirmed from a position of an operator, or when the identification information is too far to be confirmed, the operator fails to operate the automated guided vehicle. Therefore, the operation state control unit (65) may allow the terminal (60) to operate the automated guided vehicle (10) after a positional relationship between the operator and the automated guided vehicle (10) is set to an appropriate state.

## Description

### TECHNICAL FIELD

The present invention relates to an automated guided vehicle operation system.

### BACKGROUND ART

Conventionally, for example, an automated guided vehicle as described in Patent Literature 1 is known. An automated guided vehicle is used, for example, as a vehicle that conveys a container unloaded from a ship to a desired position in a harbor. In the harbor, a predetermined travel route is set, and a plurality of automated guided vehicles travels on the travel route according to a command from a control tower as an external command unit.

### Citation List

### Patent Literature

Patent Literature 1: Japanese Patent Application Publication No. 2005-239314

### SUMMARY OF INVENTION

### Technical Problem

Here, the automated guided vehicle as described above retreats from the travel route to a maintenance area at the time of maintenance or the like. At the time of such retreat, since the automated guided vehicle does not have a cab, an operator moves the automated guided vehicle to the maintenance area by operating a dedicated remote controller. Here, in order to connect the remote controller and the automated guided vehicle, there are wired connection and wireless connection. In the case of a wired remote controller, it is necessary to connect a cord of the remote controller to a connector provided in the automated guided vehicle. In order to prevent the operator from coming into contact with a machine, it is necessary to operate the remote controller from a position away from the machine by a certain distance. However, when the operator is delayed in accompanying the automated guided vehicle, a cord may be caught in the automated guided vehicle, and the remote controller or the connector may be damaged. On the other hand, also when a wireless remote controller is used, it is necessary to connect a receiver necessary for pairing to a connector of the automated guided vehicle. Since the receiver is generally associated with the remote controller on a one-to-one basis, when there is a plurality of automated guided vehicles, it is necessary to prepare the remote controller and the receiver as many as the number of automated guided vehicles. In this way, connector connection is required to connect the remote controller and the automated guided vehicle, and a connector having high waterproofness is required. As described above, there has been a demand for an operation system capable of operating an automated guided vehicle with a simple configuration without using a connector or the like requiring waterproofness. In addition, when the operator operates the automated guided vehicle, it is preferable that the operation is performed after a positional relationship between a work vehicle and the automated guided vehicle is set to an appropriate state, but the operation in consideration of such a positional relationship is disabled simply by connecting the remote controller to the automated guided vehicle.

An object of the present invention is to provide an operation system that allows an operator to operate an automated guided vehicle from an appropriate position with a simple configuration.

### Solution to Problem

One aspect of the present invention is an automated guided vehicle operation system including: a plurality of automated guided vehicles; and a terminal that operates one of the automated guided vehicles, in which the terminal includes a photographing unit, the automated guided vehicles are assigned with identification information for identifying each of the automated guided vehicles, and the operation system includes an operation state control unit configured to allow the terminal to operate the automated guided vehicle while the photographing unit continues to acquire an image of the identification information.

In the automated guided vehicle operation system, the automated guided vehicles are assigned with the identification information for identifying each automated guided vehicle. That is, by photographing the identification information by the photographing unit, the terminal specifies an automated guided vehicle to be operated and then allows the automated guided vehicle to be operated. As described above, the operator allows the terminal to operate the automated guided vehicle with a simple configuration in which the identification information is merely assigned to the automated guided vehicle without using a connector or the like requiring waterproofness. In addition, the operation state control unit allows the terminal to operate the automated guided vehicle while the photographing unit continues to acquire the image of the identification information. That is, when the identification information is not confirmed from a position of the operator, or when the identification information is too far to be confirmed, the operator fails to operate the automated guided vehicle. Therefore, the operation state control unit allows the terminal to operate the automated guided vehicle after a positional relationship between the operator and the automated guided vehicle is set to an appropriate state. As described above, the simple configuration allows the operator to operate the automated guided vehicle from an appropriate position.

The automated guided vehicle operation system may further include an estimation unit configured to estimate a positional relationship of the automated guided vehicle with respect to a position of the terminal based on a display mode of information in the image acquired by the photographing unit. As described above, the estimation unit may easily estimate the positional relationship between the terminal (that is, the operator) and the automated guided vehicle from the image acquired by the photographing unit without using a complicated process or a special sensor. Furthermore, the operation state control unit may control the operation state of the terminal by effectively using the estimation result of the estimation unit.

The estimation unit may acquire at least one of a direction and a distance of the automated guided vehicle with respect to the terminal based on the display mode of the identification information in the image acquired by the photographing unit. As a result, the estimation unit may easily acquire at least one of the direction and the distance of the automated guided vehicle with respect to the terminal from the display mode of the identification information without performing complicated image processing or the like.

The operation state control unit may adjust an operation mode by the terminal based on a comparison result between a reference region set for the image acquired by the photographing unit and a content displayed in the image. The operation state control unit may perform control in consideration of the positional relationship between the operator and the automated guided vehicle without performing complicated processing simply by comparing the reference region with the content displayed in the image.

The operation state control unit allows the terminal to operate the automated guided vehicle for a predetermined time even when the identification information is framed out from the image acquired by the photographing unit. As a result, even when the identification information is accidentally framed out, it is possible to continue the operation as long as the identification information is photographed immediately.

The operation state control unit may execute control to restrict the operation of the automated guided vehicle based on a display mode of the identification information in the image acquired by the photographing unit. As a result, it is possible to improve safety when the automated guided vehicle is operated.

### Advantageous Effects of Invention

According to the present invention, there is provided an operation system that allows an operator to operate an automated guided vehicle from an appropriate position with a simple configuration.

### BRIEF DESCRIPTION OF DRAWINGS

FIG. 1 is a schematic plan view illustrating a state of a container terminal in which an automated guided vehicle operation system according to an embodiment of the present invention is used.
FIG. 2 is a schematic side view illustrating a state of the automated guided vehicle in the container terminal illustrated in FIG. 1.
FIG. 3 is a schematic view illustrating an example of the automated guided vehicle to which identification information is assigned.
FIG. 4 is a block diagram illustrating a system configuration of the operation system.
FIG. 5 is a diagram illustrating an example of an operation screen of a terminal.
FIG. 6 is a diagram illustrating an example of the operation screen of the terminal.
FIG. 7 is a schematic plan view illustrating a positional relationship between an operator and the automated guided vehicle.
FIG. 8 is a diagram illustrating an example of the operation screen of the terminal.
FIG. 9 is a schematic view illustrating an automated guided vehicle according to a modification.
FIG. 10 is a schematic view illustrating an automated guided vehicle according to a modification.
FIG. 11 is a diagram illustrating an example of a pattern of arrangement of marks.

### DESCRIPTION OF EMBODIMENTS

Hereinafter, embodiments of the present invention will be described in detail with reference to the drawings. In the drawings, the same or equivalent elements are denoted by the same reference numerals, and redundant description will be omitted.

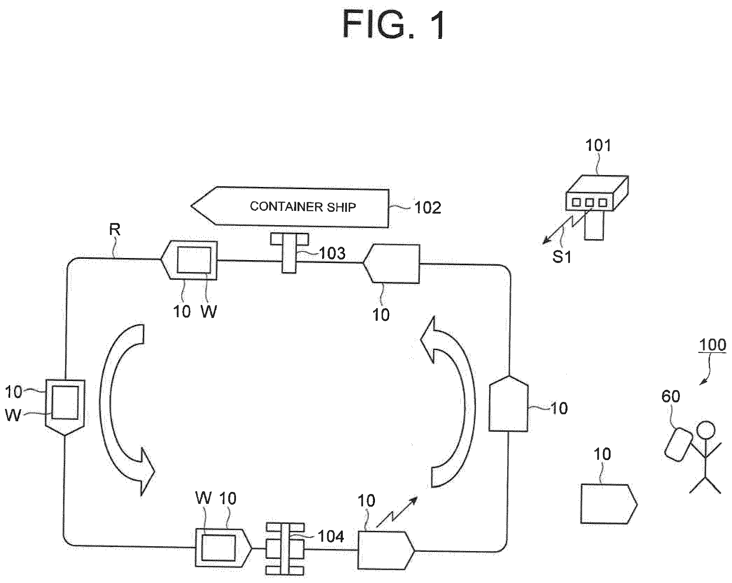

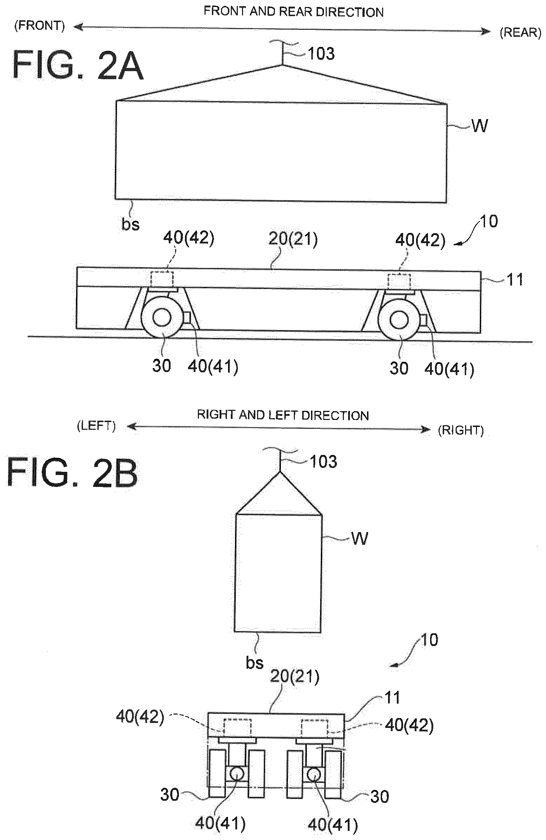

FIG. 1 is a schematic plan view illustrating a state of a container terminal in which an operation system 100 of an automated guided vehicle 10 according to an embodiment of the present invention is used. FIGS. 2A and 2B are schematic side views illustrating a state of the automated guided vehicle 10 in the container terminal illustrated in FIG. 1. First, a configuration of the automated guided vehicle 10 and an action mode of the automated guided vehicle 10 in the container terminal will be described with reference to FIGS. 1, 2A, and 2B.

As shown in FIG. 1, in a container terminal in a harbor, a plurality of automated guided vehicles (AGV) 10 travels on a predetermined travel route R according to a command S1 from a control tower 101 as an external command unit. The automated guided vehicle 10 receives a command S1 for wirelessly controlling a traveling state of the automated guided vehicle 10 from the control tower 101, and travels on the travel route R. Each automated guided vehicle 10 stops at a loading position of a container W according to the command S1. The position of a crane 103 is controlled by the control tower 101. The crane 103 is moved to the loading position of the container W in a state of suspending the container W. Position information of the crane 103 is fed back to the control tower 101. The container W is unloaded from a container ship 102 by the crane 103 to each automated guided vehicle 10. The container W unloaded by the crane 103 is loaded on the automated guided vehicle 10. The automated guided vehicle 10 on which the container W is loaded travels along the travel route R to a rubber tire crane 104. The container W loaded on the automated guided vehicle 10 is unloaded by the rubber tire crane 104. The automated guided vehicle 10 from which the container W has been unloaded returns to the crane 103 along the travel route R.

As illustrated in FIGS. 2A and 2B, a vehicle body 11 of the automated guided vehicle 10 includes a cargo bed 20, a plurality of drive wheels 30, and a plurality of motors 40. The cargo bed 20 is provided with a placement surface 21 on which the container W suspended by the crane 103 is placed. The placement surface 21 has a planar shape extending horizontally. The placement surface 21 has a quadrangular shape in plan view formed to be wider than a lower surface bs of the container W. The motor 40 generates power for putting the drive wheel 30 into action. As the motor 40, a traveling motor 41 as a power source and a steering motor 42 are adopted. The traveling motor 41 generates a driving force for causing the automated guided vehicle 10 to travel in the front and rear direction. The steering motor 42 generates power for steering the drive wheels 30 to change the traveling direction of the automated guided vehicle 10.

Next, the operation system 100 of the automated guided vehicle 10 according to the embodiment of the present invention will be described. The operation system 100 is a system for manually operating a specific automated guided vehicle 10 among the plurality of automated guided vehicles 10 by a terminal operation of an operator. For example, when maintenance or the like is required for a specific automated guided vehicle 10 among the automated guided vehicles 10 performing automatic driving as described above, the operation system 100 according to the present embodiment is used. As illustrated in FIG. 1, the operation system 100 includes a plurality of automated guided vehicles 10 and a terminal 60 configured to operate the automated guided vehicles. Although only one terminal 60 is illustrated in FIG. 1, the operation system 100 may include a plurality of terminals 60 by a plurality of operators each having the terminal 60.

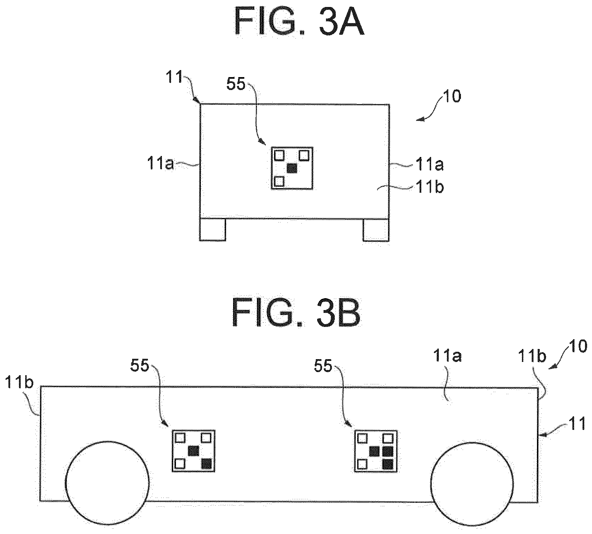

In the operation system 100, the automated guided vehicle 10 to be operated is determined using the identification information individually assigned to the automated guided vehicle 10. FIGS. 3A and 3B are schematic views illustrating examples of the automated guided vehicle 10 to which identification information is assigned. As illustrated in FIGS. 3A and 3B, the automated guided vehicles 10 are assigned with the identification information for identifying each automated guided vehicle 10. The identification information is unique information assigned to one automated guided vehicle 10. The identification information is information that enables specification of one automated guided vehicle 10 from among the plurality of automated guided vehicles 10. In the examples illustrated in FIGS. 3A and 3B, identification information is represented by a mark 55 of a QR code (registered trademark). The mark 55 includes specific information by being expressed as a special graphic. The mark 55 is displayed so that specific information including identification information may be grasped by being read as an image. In addition to the QR code, the identification information may be expressed by a pattern, a combination of symbols, or the like that allows a specific content to be grasped by reading, such as a bar code. Alternatively, the identification information may be directly expressed by characters, numbers, or the like. For example, the identification information may be expressed by directly describing a unit number assigned to the automated guided vehicle 10 on the vehicle body 11. Further, it is sufficient that one automated guided vehicle 10 can be specified from the plurality of automated guided vehicles 10, and one automated guided vehicle 10 may be specified by a combination of a plurality of pieces of identification information provided.

The mark 55 is displayed on the vehicle body 11 of the automated guided vehicle 10. Here, the mark 55 is displayed on each of the side surface 11a and the end surface 11b of the vehicle body 11. The side surface 11a and the end surface 11b have a different number of marks 55. The side surface 11a has two marks 55 that are displayed at positions separated from each other in the longitudinal direction (see FIG. 3B). The end surface 11b has one mark 55 displayed thereon (see FIG. 3A). Each mark 55 may include information other than the identification information. For example, the mark 55 may include information such as a formation location of the mark 55, that is, on which surface of the vehicle body 11, and at which position in the surface the mark 55 is formed.

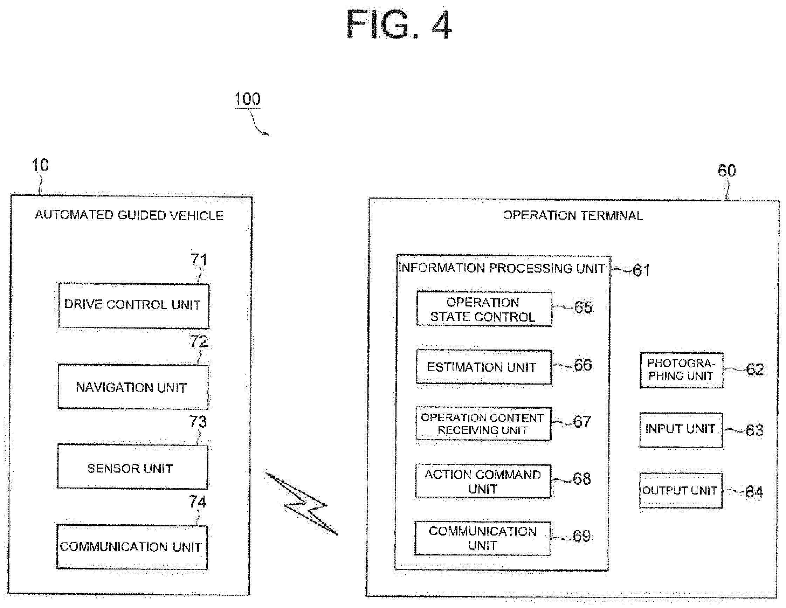

Next, a system configuration of the operation system 100 of the automated guided vehicle 10 according to the embodiment of the present invention will be described with reference to FIG. 4. FIG. 4 is a block diagram illustrating the system configuration of the operation system 100.

As illustrated in FIG. 4, the automated guided vehicle 10 includes a drive control unit 71, a navigation unit 72, a sensor unit 73, and a communication unit 74. The drive control unit 71 is a unit that controls the motor 40 in order to cause the automated guided vehicle 10 to travel in a desired direction at a desired speed. The navigation unit 72 is a unit that guides in what route the automated guided vehicle 10 should convey when the automated guided vehicle 10 performs automatic traveling. The sensor unit 73 is a unit configured with various sensors and cameras for grasping the surrounding situation when the automated guided vehicle 10 performs automatic traveling. The communication unit 74 is a unit that exchanges signals for communicating with the control tower 101 and other devices. The communication unit 74 transmits and receives various types of information to and from the terminal 60. The communication unit 74 receives an action command signal from the terminal 60.

The terminal 60 includes an information processing unit 61, a photographing unit 62, an input unit 63, and an output unit 64. As the terminal 60, for example, a general-purpose device such as a smartphone or a tablet terminal may be used. When the general-purpose device is used as the terminal 60, an operator installs a dedicated application in the terminal 60.

The photographing unit 62 is a unit that acquires an image by photographing. The photographing unit 62 is configured as a camera or the like built in the terminal 60. As the photographing unit 62, an external camera may be used. The input unit 63 is a unit that receives an operation input from the operator. The input unit 63 is configured with a touch panel, a microphone for performing voice recognition, and the like. The output unit 64 is a unit that outputs information to the operator. The output unit 64 is configured with a monitor, a speaker, and the like.

The information processing unit 61 is a unit that performs various processes for operating the automated guided vehicle 10. The information processing unit 61 includes a processor, a memory, and a storage. The processor is an arithmetic unit such as a central processing unit (CPU). The memory is a storage medium such as a read only memory (ROM) or a random access memory (RAM). The storage is a storage medium such as a hard disk drive (HDD). The processor integrates the memory, the storage, a communication interface, and a user interface, and implements a function of the information processing unit 61 described later. In the information processing unit 61, for example, a program stored in the ROM is loaded into the RAM, and the program loaded into the RAM is executed by the CPU, thereby implementing various functions.

The information processing unit 61 includes an operation state control unit 65, an estimation unit 66, an operation content receiving unit 67, an action command unit 68, and a communication unit 69.

The operation state control unit 65 is a unit that controls an operation state by the terminal 60 with respect to a specific automated guided vehicle 10. Based on the image acquired by the photographing unit 62, the operation state control unit 65 performs control so as to enable the operation of the automated guided vehicle 10 in the image. The image is preferably acquired with an image extracted from the continuously captured video, but the acquisition method is not limited thereto. The operation state control unit 65 allows the terminal 60 to operate the automated guided vehicle 10 while the photographing unit 62 continues to acquire the image of the identification information (here, the mark 55). That is, the operation state control unit 65 specifies the automated guided vehicle 10 whose identification information has been acquired from the image, and establishes a connection state by communication with the automated guided vehicle 10. In addition, for example, when the operator stops photographing the automated guided vehicle 10 and may no longer acquire an image of the identification information, the operation state control unit 65 releases the connection state with the automated guided vehicle 10 and ends the operable state. A specific action of the operation state control unit 65 will be described later.

The estimation unit 66 is a unit that estimates a positional relationship of the automated guided vehicle 10 with respect to a position of the terminal 60 based on a display mode of information in the image acquired by the photographing unit 62. Here, the information in the image refers to various information that may be acquired from the image, such as a characteristic portion (for example, a portion that does not include identification information but is easily recognized in the image, such as a company logo) illustrated on the vehicle body 11 and an edge (outer shape) of the vehicle body 11, in addition to the mark 55 in the image. The display mode is a size, a position, the number, and the like in the image, and specifically, the size and the number of the marks 55 in the image, the position of the mark 55 in the image, the position of the characteristic portion illustrated on the vehicle body 11, and the like. The positional relationship of the automated guided vehicle 10 with respect to the position of the terminal 60 is a direction, a distance, and the like of the automated guided vehicle 10 with respect to the position of the terminal 60. A specific action of the estimation unit 66 will be described later.

The operation content receiving unit 67 is a unit that receives the operation content when the operator makes an input for operating the automated guided vehicle 10 with the input unit 63. The action command unit 68 is a unit that generates an action command signal to the automated guided vehicle 10 based on the operation content received by the operation content receiving unit 67. The communication unit 69 is a unit that exchanges signals for communicating with other devices. The communication unit 69 transmits and receives various types of information to and from the automated guided vehicle 10. The communication unit 69 transmits an action command signal to the automated guided vehicle 10. A method of establishing a connection state between the communication units 69 and 74 is not particularly limited, and any method, such as Wi-Fi, Bluetooth (registered trademark), or other methods including 4G communication or 5G communication that is optimized for communication within the site of the container terminal, may be adopted. Shortdistance connection means such as Bluetooth is preferably used from the viewpoint of operating the automated guided vehicle 10 existing near the terminal 60 regardless of the radio wave state.

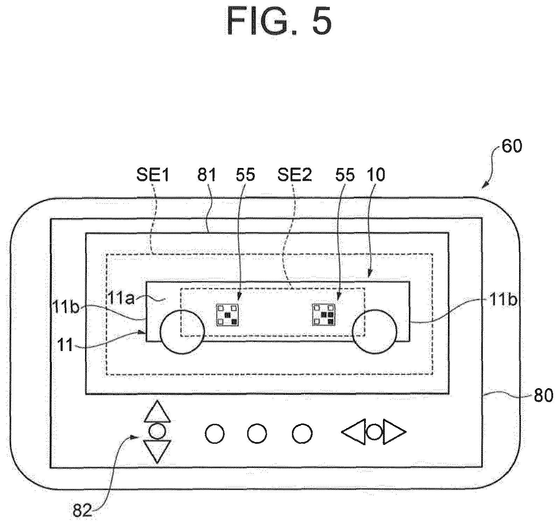

Next, the operation content of the automated guided vehicle 10 by the operation system 100 will be described in detail with reference to FIGS. 5 to 8B. FIG. 5 is a diagram illustrating an example of an operation screen of the terminal 60. As illustrated in FIG. 5, a screen 80 of the terminal 60 includes an image display unit 81 that displays an image acquired by the photographing unit 62 and an operation unit 82 that displays an interface for an operator to perform an operation.

In the state illustrated in FIG. 5, the mark 55 is shown in the image. That is, the photographing unit 62 is in a state of acquiring the image of the mark 55 including the identification information. In this state, the operation state control unit 65 establishes a connection state with the automated guided vehicle 10 displayed in the image via the communication units 69 and 74. This allows the operator to operate the automated guided vehicle 10 displayed in the image by operating the operation unit 82. When the operator operates the operation unit 82, the operation content receiving unit 67 receives the operation content. The action command unit 68 generates an action command signal based on the operation content received by the operation content receiving unit 67. Then, the communication unit 69 transmits an action command signal to the communication unit 74 of the automated guided vehicle 10. The drive control unit 71 of the automated guided vehicle 10 generates a drive signal according to the action command signal. As a result, the automated guided vehicle 10 carries out an action according to the operation content of the operator.

The image display unit 81 sets a first reference region SE1 and a second reference region SE2 with respect to the image acquired by the photographing unit 62. In addition, the operation state control unit 65 adjusts an operation mode by the terminal 60 based on a comparison result between the first and second reference regions SE1, SE2 set for the image and the content displayed in the image. The first reference region SE1 sets a region within which the automated guided vehicle 10 in the image is to fall. That is, the fact that the automated guided vehicle 10 in the image extends beyond the first reference region SE1 indicates that the terminal 60 (that is, the operator) is too close to the automated guided vehicle 10. The second reference region SE2 is a region set inside the first reference region SE1. The second reference region SE2 sets a reference of a size at which the automated guided vehicle 10 in the image is to be displayed. That is, the fact that the automated guided vehicle 10 in the image falls within the second reference region SE2 indicates that the terminal 60 (that is, the operator) is too far from the automated guided vehicle.

The operation state control unit 65 detects the edge of the vehicle body 11 to grasp the outer shape of the vehicle body 11. The operation state control unit 65 adjusts whether to permit or restrict the operation by the terminal 60 based on a comparison result between the outer shape of the vehicle body 11 displayed in the image and the reference regions SE1 and SE2.

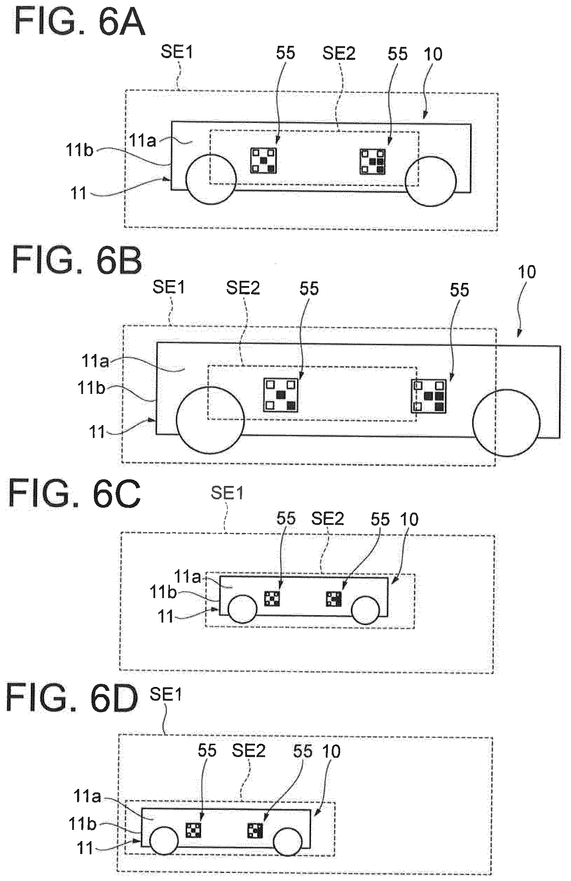

For example, in the state illustrated in FIG. 6A, the vehicle body 11 in the image falls within the first reference region SE1 and extends beyond the second reference region SE2. In this case, the operation state control unit 65 judges that the distance between the terminal 60 and the automated guided vehicle 10 is appropriate, and sets the automated guided vehicle 10 in an operable state without imposing any operational restrictions.

In the state illustrated in FIG. 6B, the vehicle body 11 in the image extends beyond the first reference region SE1. In this case, the operation state control unit 65 judges that the distance between the terminal 60 and the automated guided vehicle 10 is too short, and imposes an operational restriction. The operational restriction means that by restricting the transmission of the action command signal to the automated guided vehicle 10, the automated guided vehicle 10 is made inoperable and immovable. The operational restriction includes not only putting into an inoperable state, but also adjusting the operation mode by limiting a traveling speed or displaying a warning to the operator. For example, when the amount of the vehicle body 11 extending beyond the first reference region SE1 is small, the operation state control unit 65 limits speed, displays a warning, and the like.

In the state illustrated in FIG. 6C, the vehicle body 11 in the image falls within the second reference region SE2. In this case, the operation state control unit 65 judges that the distance between the terminal 60 and the automated guided vehicle 10 is too far, and imposes an operational restriction. Note that the operational restriction is the same as that in the case of FIG. 6B described above. As illustrated in FIG. 6D, the second reference region SE2 may track the vehicle body 11 in the image. The second reference region SE2 moves such that its center point coincides with the center point of the vehicle body 11 in the image.

The operation state control unit 65 may allow the terminal 60 to operate the automated guided vehicle 10 for a predetermined time even when the identification information (mark 55) is framed out from the image acquired by the photographing unit 62. Framed out means that the mark 55 is not displayed in the image. The operation state control unit 65 may allow the terminal 60 to operate the automated guided vehicle 10 for a predetermined time even when the vehicle body 11 in the image extends beyond the first reference region SE1 and when the vehicle body 11 falls within the second reference region SE2.

The operation state control unit 65 executes control to restrict the operation of the automated guided vehicle 10 based on the display mode of the identification information (mark 55) in the image acquired by the photographing unit 62. At this time, the estimation unit 66 acquires at least one of the direction and distance of the automated guided vehicle 10 with respect to the terminal 60 based on the display mode of the identification information (here, the mark 55) in the image acquired by the photographing unit 62.

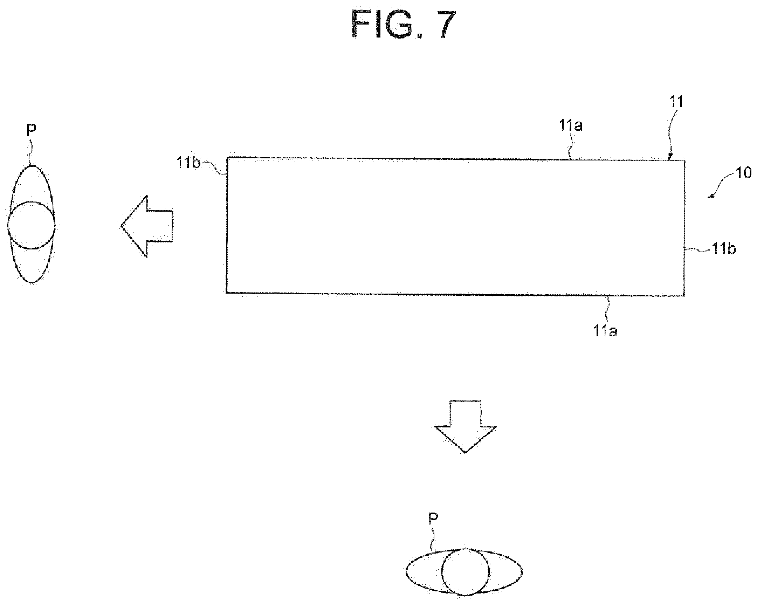

Specifically, as illustrated in FIG. 7, when an operator P stands on the side surface 11a side of the automated guided vehicle 10, if the automated guided vehicle 10 moves so as to approach the operator P side, the automated guided vehicle 10 and the operator P may be too close to each other. In addition, when the operator P stands on the end surface 11b side of the automated guided vehicle 10, if the automated guided vehicle 10 moves so as to approach the operator P side, the automated guided vehicle 10 and the operator P may be too close to each other. In order to suppress approaching as described above, the operation state control unit 65 restricts the operation of the automated guided vehicle 10 in the direction as described above. The restriction of the operation is to reduce the speed of the automated guided vehicle 10 and prevent the automated guided vehicle 10 from moving in the direction regardless of the operation by the operator.

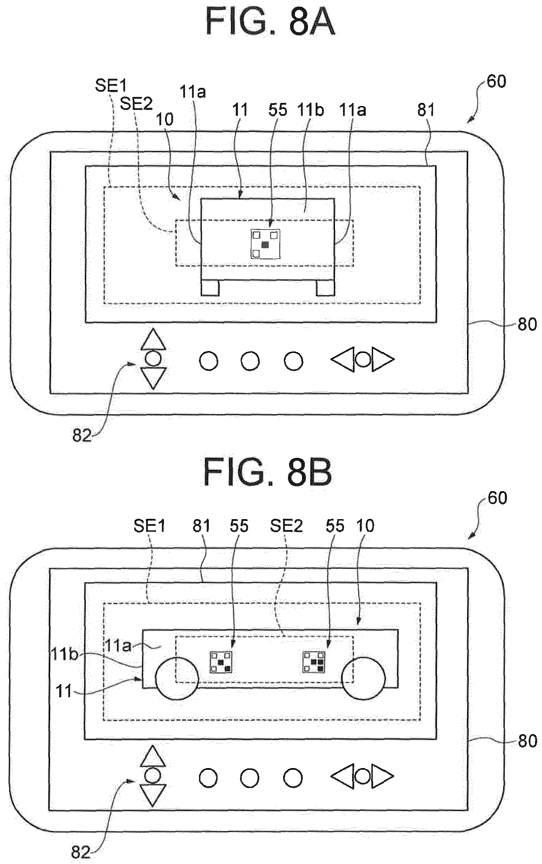

As illustrated in FIGS. 8A and 8B, the estimation unit 66 acquires at least one of the direction and distance of the automated guided vehicle 10 with respect to the terminal 60 based on the display mode of the mark 55 displayed in the image. For example, as illustrated in FIG. 8A, when there is only one mark 55 shown in the image, the estimation unit 66 estimates that the direction of the automated guided vehicle 10 with respect to the terminal 60 is a direction facing the terminal 60 on the end surface 11b side. The operation state control unit 65 executes the restriction of the operation of the automated guided vehicle 10 based on the estimation result by the estimation unit 66. In this way, by referring to the estimation result of the estimation unit 66, the operation state control unit 65 may execute control to restrict the operation of the automated guided vehicle 10 based on the display mode of the mark 55 in the image acquired by the photographing unit 62. Further, as illustrated in FIG. 8B, when there are two marks 55 shown in the image, the estimation unit 66 estimates that the direction of the automated guided vehicle 10 with respect to the terminal 60 is a direction facing the terminal 60 on the side surface 11a side. The operation state control unit 65 executes the restriction of the operation of the automated guided vehicle 10 based on the estimation result by the estimation unit 66.

At this time, the estimation unit 66 may also judge the outer shape of the vehicle body 11 in the image to estimate the direction of the automated guided vehicle 10. That is, the estimation unit 66 refers to the length in the lateral direction of the outer shape of the vehicle body 11 in the image. In the state illustrated in FIG. 8A, since the length of the outer shape of the vehicle body 11 in the image is short, it is estimated that there is a high possibility that the end surface 11b is displayed in the image. In addition, in the state illustrated in FIG. 8B, since the length of the outer shape of the vehicle body 11 in the image is long, it is estimated that there is a high possibility that the side surface 11a is displayed in the image. For example, when there is one mark 55 in the image, it is difficult to distinguish whether only one mark 55 is shown because it is the mark 55 on the end surface 11b or only one mark 55 is shown because the distance between the automated guided vehicle 10 and the terminal 60 is too short. Therefore, the estimation unit 66 may easily perform estimation by judging the number of marks 55 and the outer shape of the vehicle body 11.

As illustrated in FIG. 8A, when the end surface 11b is displayed in the image, it may be inappropriate to use the reference regions SE1 and SE2 set for the end surface 11b. Therefore, when the end surface 11b is displayed, the image display unit 81 may shorten the lengths of the reference regions SE1 and SE2 in the lateral direction. The operation state control unit 65 performs processing similar to that described in FIGS. 6A to 6D using the shortened reference regions SE1 and SE2. Since the end surface 11b and the side surface 11a have the same height in the vertical direction, the sizes of the reference regions SE1 and SE2 in the vertical direction are fixed.

The estimation unit 66 may estimate the distance of the automated guided vehicle 10 with respect to the terminal 60 based on the display mode of the mark 55 in the image. For example, the estimation unit 66 may estimate the distance of the automated guided vehicle 10 with respect to the terminal 60 from the size of the mark 55 in the image. Alternatively, when two marks 55 are displayed in the image, the distance of the automated guided vehicle 10 with respect to the terminal 60 may be estimated from the distance between the marks 55 in the image. The operation state control unit 65 may control the operation state of the automated guided vehicle 10 in consideration of the distance estimated by the estimation unit 66. For example, when limiting the speed of the automated guided vehicle 10, the operation state control unit 65 may change the speed limit level according to the distance of the automated guided vehicle 10 with respect to the terminal 60.

Next, functions and effects of the operation system 100 of the automated guided vehicle 10 according to the present embodiment will be described.

In the operation system 100 of the automated guided vehicle 10, the plurality of automated guided vehicles 10 is assigned with the marks 55 of identification information for identifying each automated guided vehicle 10. That is, by photographing the mark 55 of the identification information by the photographing unit 62, the terminal 60 specifies an automated guided vehicle 10 to be operated and then allows the automated guided vehicle 10 to be operated. As described above, the operator allows the terminal 60 to operate the automated guided vehicle 10 with a simple configuration in which the identification information is merely assigned to the automated guided vehicle 10 without using a connector or the like requiring waterproofness. In addition, the operation state control unit 65 allows the terminal 60 to operate the automated guided vehicle 10 while the photographing unit 62 continues to acquire the image of the mark 55 of the identification information. That is, when the mark 55 of the identification information is not confirmed from a position of the operator, or when the identification information is too far to be confirmed, the operator fails to operate the automated guided vehicle. Therefore, the operation state control unit 65 allows the terminal 60 to operate the automated guided vehicle 10 after a positional relationship between the operator and the automated guided vehicle 10 is set to an appropriate state. As described above, the simple configuration allows the operator to operate the automated guided vehicle 10 from an appropriate position.

The operation system 100 of the automated guided vehicle 10 further includes the estimation unit 66 configured to estimate the positional relationship of the automated guided vehicle 10 with respect to the position of the terminal 60 based on the display mode of the information in the image acquired by the photographing unit 62. As described above, the estimation unit 66 may easily estimate the positional relationship between the terminal and the automated guided vehicle 10 from the image acquired by the photographing unit 62 without using a complicated process or a special sensor. Furthermore, the operation state control unit 65 may control the operation state of the terminal 60 by effectively using the estimation result of the estimation unit 66.

The operation state control unit 65 adjusts the operation mode by the terminal 60 based on a comparison result between the reference regions SE1 and SE2, which are set for the image acquired by the photographing unit 62, and the content displayed in the image. The operation state control unit 65 may perform control in consideration of the positional relationship between the operator and the automated guided vehicle 10 without performing complicated processing simply by comparing the reference regions SE1 and SE2 with the contents displayed in the image.

The estimation unit 66 acquires at least one of the direction and the distance of the automated guided vehicle 10 with respect to the terminal 60 based on the display mode of the identification information in the image acquired by the photographing unit 62. As a result, the estimation unit 66 may easily acquire at least one of the direction and the distance of the automated guided vehicle 10 with respect to the terminal 60, from the display mode of the mark 55 of the identification information, without performing complicated image processing or the like.

The operation state control unit 65 allows the terminal 60 to operate the automated guided vehicle 10 for a predetermined time even when the mark 55 of the identification information is framed out from the image acquired by the photographing unit 62. As a result, even when the mark 55 of the identification information is accidentally framed out, it is possible to continue the operation as long as the mark 55 of the identification information is photographed immediately.

The operation state control unit 65 executes control to restrict the operation of the automated guided vehicle 10 based on the display mode of the mark 55 of the identification information in the image acquired by the photographing unit 62. For example, as described in FIG. 7, when the automated guided vehicle moves in a direction approaching the operator, the operation state control unit 65 disables operation in the direction. As a result, it is possible to improve safety when the automated guided vehicle 10 is operated.

The present invention is not limited to the above-described embodiments.

For example, the operation state control unit 65 and the estimation unit 66 may be provided on the automated guided vehicle 10 side. Alternatively, the functions of the operation state control unit 65 and the estimation unit 66 may be shared between the automated guided vehicle 10 side and the terminal 60 side.

An assigned mode of the identification information to the vehicle body 11 in the above-described embodiment is merely an example, and the identification information may be assigned in any mode. In addition, the operation state control unit may perform characteristic control according to the assigned mode of the identification information.

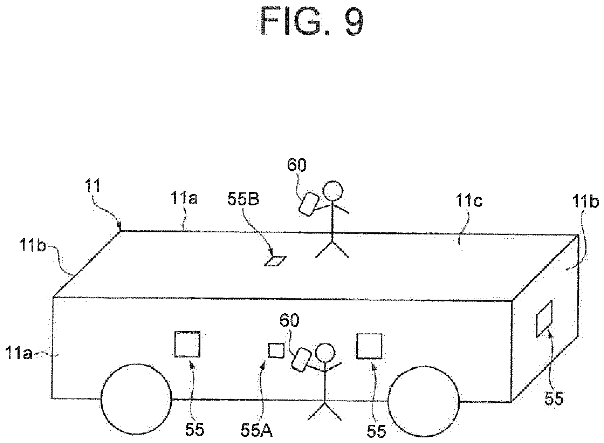

For example, the configuration illustrated in FIG. 9 may be adopted to allow the operator to perform slow driving at a position close to the automated guided vehicle 10. In FIG. 9, a mark 55A smaller than the mark 55 described above is provided on the side surface 11a of the vehicle body 11. When a normal operation is performed (for example, FIG. 6A), the mark 55A is so small as to be hardly recognized in the image, and therefore, the operator approaches the vehicle body 11, whereby the mark 55A has a size enough to be easily recognized in the image. When the operator approaches the side surface 11a and photographs the mark 55A, the estimation unit 66 estimates that the automated guided vehicle 10 faces the terminal 60 on the side surface 11a side and the terminal 60 is considerably close to the side surface 11a. At this time, the operation state control unit 65 restricts the operation such that the automated guided vehicle 10 moves in a slow driving mode. By using such a slow driving mode, the operator allows the automated guided vehicle 10 to move slowly and accurately stop at a desired position while confirming in detail the surrounding situation of the automated guided vehicle 10 when the automated guided vehicle 10 is put into a garage, or in other cases. A mark 55B having the same purpose as the mark 55A may be provided on the upper surface 11c of the vehicle body 11. At this time, the operator photographs the mark 55B while riding on the upper surface 11c of the vehicle body 11.

A method used by the estimation unit 66 to judge that the marks displayed in the image are the marks 55A and 55B is not particularly limited. For example, as illustrated in FIGS. 6A to 6D, in a state where the marks 55 are shown in a predetermined size in the image, the edge of the vehicle body 11 also exists in the image. On the other hand, in a state where the small marks 55A and 55B are shown in a predetermined size in the image, the wall surface of the vehicle body 11 alone exists in the surroundings, and the edge does not exist in the image. Therefore, when the edge is not detected around the marks in the image, the estimation unit 66 may determine that the marks in the image are the marks 55A and 55B. Alternatively, information indicating that "marks 55A and 55 B themselves are small" may be included in the patterns of the marks 55A and 55B, and the estimation unit 66 may acquire the information via the image.

In the above-described embodiment, the edge of the vehicle body 11 is also detected when the processing illustrated in FIGS. 6A to 6D is performed, but the edge detection is not performed, and the control may be performed based on only the image of the mark 55 indicating the identification information. For example, when the mark 55 in the image is displayed in a size of a certain range, the operation state control unit 65 may allow the terminal 60 to operate. In this case, if the mark 55 on the side surface 11a side and the mark 55 on the end surface 11b side have different patterns and colors or include different information, the estimation unit 66 may estimate the direction of the automated guided vehicle 10 from only one mark 55.

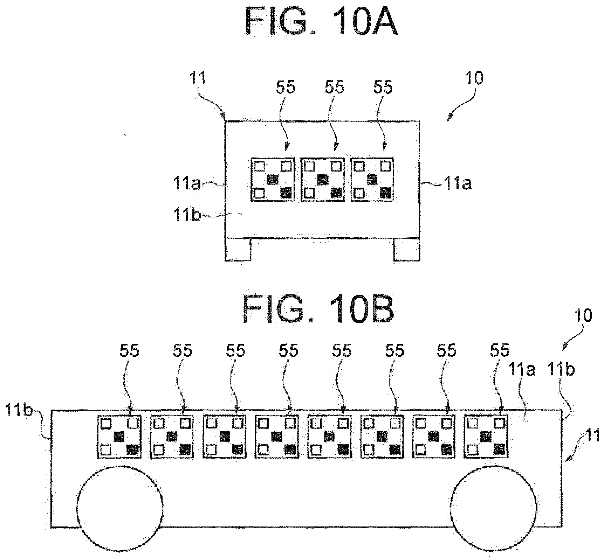

In addition, for example, as illustrated in FIGS. 10A and 10B, a large number of marks 55 may be assigned to the vehicle body 11 so as to be confirmed from each direction of the vehicle body 11. In this case, the operation state control unit 65 may allow the terminal 60 to operate when a certain number or more of the marks 55 may be acquired in the image. For example, when the terminal 60 is so close to the vehicle body 11 that only one or two marks 55 may be acquired in the image, the operation state control unit 65 may restrict the operation. Furthermore, the estimation unit 66 may estimate the distance between the terminal 60 and the automated guided vehicle 10 based on the size of the mark 55 in the image, the distance between the marks 55, and the like. Further, the estimation unit 66 may estimate the direction of the automated guided vehicle 10 from the number of the marks 55 in the image. For example, as illustrated in FIG. 10A, three marks 55 are assigned to the end surface 11b. Therefore, when four or more marks 55 are displayed in the image, the estimation unit 66 judges that the vehicle body 11 faces the terminal 60 on the side surface 11a side.

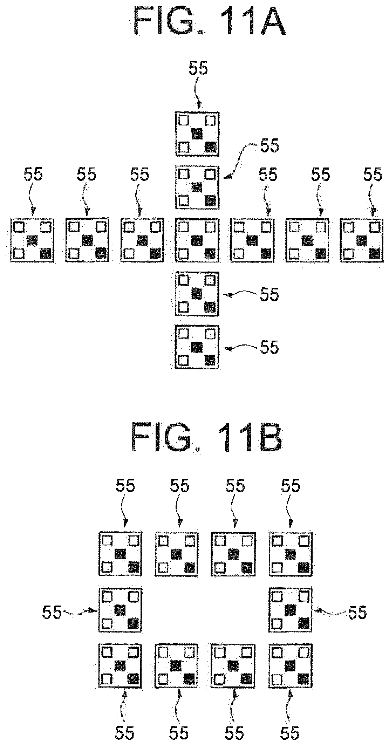

Furthermore, as illustrated in FIGS. 11A and 11B, the pattern may be formed by the plurality of marks 55 by devising the arrangement of the plurality of marks 55. For example, by applying a pattern as illustrated in FIG. 11A to the side surface 11a of the vehicle body 11 and applying a pattern as illustrated in FIG. 11B to the end surface 11b, the estimation unit 66 may estimate the direction of the automated guided vehicle 10 based on the pattern of the arrangement of the marks 55 in the image.

Furthermore, the estimation unit 66 may perform estimation based on not only the special graphic (mark 55) indicating the identification information and the edge of the vehicle body 11 but also the display mode of various information in the image. For example, when a characteristic portion such as a picture, a logo, or a character shown on the vehicle body 11, or a component that is easily recognized is shown in an image, the estimation unit 66 may perform estimation using these images.

In the above-described embodiment, a general-purpose device such as a smartphone or a tablet terminal is used as the terminal 60. Alternatively, a terminal dedicated to the operation system 100 may be used as the terminal. In this case, the dedicated terminal may have a structure or a function that facilitates operation on the operation system 100. For example, the dedicated terminal may have a camera on the edge surface instead of the back surface of the tablet. In this case, the operator may photograph the automated guided vehicle 10 with the camera on the edge surface while keeping the screen of the tablet substantially horizontal. In addition, the dedicated terminal may have a physical button or lever instead of the operation button or lever on the image.

Alternatively, without creating the entire terminal as a dedicated product, an accessory having the camera on the edge surface or the physical button and lever described above may be created, and a general-purpose smartphone or tablet terminal may be added on the dedicated accessory.

In a situation where the operation state control unit 65 of the terminal 60 specifies the automated guided vehicle 10 and establishes the connection state by communication with the automated guided vehicle 10, when a terminal different from the terminal 60 establishes the connection state with the automated guided vehicle 10, the establishment of the connection state may be invalidated. That is, the terminal that has first established the connection state alone may operate the automated guided vehicle.

The operation state control unit 65 of the terminal 60 may appropriately set a region that allows a connection state by communication with the automated guided vehicle 10 to be established. For example, the connection state may be established only in a region having a predetermined distance from a maintenance area (not illustrated) so as not to establish the connection state with respect to the automated guided vehicle traveling on the travel route R.

### Reference Signs List

- 10: automated guided vehicle
- 55: mark (identification information)
- 60: terminal
- 62: photographing unit
- 65: operation state control unit
- 66: estimation unit
- 100: operation system

## Claims

1. An automated guided vehicle operation system comprising:
a plurality of automated guided vehicles; and
a terminal that operates one of the automated guided vehicles, wherein
the terminal includes a photographing unit,
the automated guided vehicles are assigned with identification information for identifying each of the automated guided vehicles, and
the operation system includes an operation state control unit configured to allow the terminal to operate the automated guided vehicle while the photographing unit continues to acquire an image of the identification information.

2. The automated guided vehicle operation system according to claim 1, further comprising an estimation unit configured to estimate a positional relationship of the automated guided vehicle with respect to a position of the terminal based on a display mode of information in the image acquired by the photographing unit.

3. The automated guided vehicle operation system according to claim 2, wherein the estimation unit acquires at least one of a direction and a distance of the automated guided vehicle with respect to the terminal based on the display mode of the identification information in the image acquired by the photographing unit.

4. The automated guided vehicle operation system according to any one of claims 1 to 3, wherein the operation state control unit adjusts an operation mode by the terminal based on a comparison result between a reference region set for the image acquired by the photographing unit and a content displayed in the image.

5. The automated guided vehicle operation system according to any one of claims 1 to 4, wherein the operation state control unit allows the terminal to operate the automated guided vehicle for a predetermined time even when the identification information is framed out from the image acquired by the photographing unit.

6. The automated guided vehicle operation system according to any one of claims 1 to 5, wherein the operation state control unit executes control to restrict the operation of the automated guided vehicle based on a display mode of the identification information in the image acquired by the photographing unit.
